(19) Europäisches Patentamt / European Patent Office / Office européen des brevets

(11) **EP 1 755 034 B1**

(12) **EUROPEAN PATENT SPECIFICATION**

(45) Date of publication and mention of the grant of the patent:
**18.01.2017 Bulletin 2017/03**

(51) Int Cl.:
***G06F 9/44*** *(2006.01)*

(21) Application number: **05388066.2**

(22) Date of filing: **18.08.2005**

(54) **Object code generation for increasing the performance of delta files**

Objektkodegenerierung für erhöhte Leistung von Deltadateien

Génération de code objet pour une perfomance accrue de fichiers delta

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**21.02.2007 Bulletin 2007/08**

(73) Proprietor: **Telefonaktiebolaget LM Ericsson (publ)**
**164 83 Stockholm (SE)**

(72) Inventors:
• **Eker, Johan**
**223 55 Lund (SE)**
• **Von Platen, Carl**
**216 19 Malmö (SE)**

(74) Representative: **Zacco Denmark A/S**
**Arne Jacobsens Allé 15**
**2300 Copenhagen S (DK)**

(56) References cited:
EP-A- 0 472 812    EP-A- 1 331 643
WO-A-2004/095457    US-A- 5 230 050
US-A- 5 469 572    US-A1- 2004 260 734
US-A1- 2005 021 572

## Description

This invention relates to the generation of updated object code of a computer program, the updated object code being suitable for the generation of an updated memory image to be loaded into a memory having stored thereon a current memory image corresponding to a current version of a computer program.

Many modern electronic devices, e.g. embedded devices, are controlled by software stored in flash memory. Flash memory is a type of memory that is frequently used in electronic devices, because it allows multiple rewrites. However, the write operations are limited to entire memory pages, so-called flash sectors, at a time. A typical page size of current flash memories is 64 kbyte.

When the software stored in a flash memory of an electronic device is updated, e.g. in order to add new features to the software and/or to correct errors in the current version of the software, some or all of the memory sectors of the flash memory are re-written or "re-flashed". In general, it is desirable to minimize the number of flash pages that are re-written during a software update, in order to minimize the time and energy consumption required for installing the software update.

In particular, an application where update times are of great concern is the over-the-air (OTA) update of mobile terminals. In such applications, it is known to distribute only modifications to the current image to the mobile terminal rather than the entire updated image. The modifications are generally referred to as delta-files. Typically, in such systems, an update agent running on the mobile terminal applies the received modifications to the current image which is thereby transformed to the updated version. Hence, it is generally desirable to reduce the size of the delta-files, in order to reduce the amount of data that has to be transmitted via the communications channel used for the OTA update.

Furthermore, it is generally desirable to reduce the amount of storage capacity and computational resources required in the mobile terminal in order to perform the software update.

It is further a general problem of such update systems that the terminal may not be functional during the update process. Hence, it is desirable to reduce the time required for reflashing the memory and, thus, the downtime of the system.

However, due to the constraints of the flash memory mentioned above, even small updates of the source code of the software may cause a large portion of the flash pages to be updated, since changing even a single byte requires an entire page to be completely rewritten.

Published US application 2003/0142556 discloses a method of flash memory programming, wherein volatile information or volatile software components are stored near the end of the respective flash memory address space of the flash memory device to keep the need of changing or adjusting flash sectors as slight as possible.

However, the above prior art method requires information about the anticipated likelihood of changing the respective information components.

US 5,230,050 discloses a program compiling method in which a procedure being compiled is split into a plurality of units referred to as segments, whereon code optimization is carried out for each of the segments.

EP 0472812 is related to a differential updating system comprising a compiler, a modified linker, and a comparator which generates a difference program file including the differences between an updated machine code and a previous version of the machine code. The modified linker receives compiled segments of the current version and segment information generated by the modified linker for the previous version and arranges the segments in memory according to their size compared with the previous version.

US 5,469,572 discloses a post-compiler object code optimiser which is performed prior to the linker and on the complete set of object code modules. The optimisation is performed so as to improve program execution efficiency.

Consequently, it is an object of the present invention to facilitate improved delta update procedures.

The above and other problems are solved by a method of generating updated object code of a computer program as defined in claim 1, the updated object code being suitable for the generation of an updated memory image to be loaded into a storage medium having stored thereon a current memory image corresponding to a current version of a computer program, the method comprising

- receiving at least one updated input code module from which the updated object code is to be generated;
- processing at least the updated input code module to generate at least one updated object code module adapted to be linked by a linker component as to generate the updated memory image;
- performing at least one optimisation process to reduce differences between said updated object code module and a corresponding one of a number of current object code modules, the number of current object code modules corresponding to the current version of said computer program.

In particular, the invention is based on the recognition that a subsequent efficient delta file generation is greatly facilitated when the compiler - or a post-processor to a compiler - optimises the generated object code as to reduce the amount of changes in the object code introduced as a consequence of an update of the corresponding source code.

Rather than relying on the possibility of detecting source level modifications in the compiled and linked binary image by essentially reverse engineering the compiler and linker processes, the above method ensures that the generated image is generated with as few changes as possible in the first place, thereby facilitating a more efficient generation of the delta file that yields smaller delta files and requires fewer memory sections to be re-written.

In particular, in some embodiments, the optimisation step includes generating the object code module such that the object code module has a size that does not exceed the corresponding size of the corresponding current object code module. In some embodiments the updated object code module may even be generated as to have the same size as the corresponding current object code module. It is an advantage that the subsequent object code modules in memory space do not need to be shifted/moved as a consequence of the modification of the object code module.

It is a further advantage that a high performance delta file generation is possible even with simple delta file generation tools, thereby avoiding the need for sophisticated and costly delta-file generation tools.

In some embodiments the at least one updated input code module is at least one updated source code module, and the method further comprises compiling the updated source code module. Alternatively, the updated input code module is at least one preliminary object code module generated by a compiler from at least one corresponding updated source code module. Hence, the method may be implemented as an integrated compiler process that receives source code and generates optimised object code, thereby allowing even the compilation process to be optimised as to reduce differences in the compiled code, thus facilitating a further improved performance of the subsequent delta file generation. Alternatively, the method is implemented as a post-processing step to a compiler, where the post-processing step receives the object code from the compiler and generates an optimised object code that is fed into the linker, thereby allowing the use of a standard compiler tool and, thus, integration of the method into an existing code generation tool chain.

When the method further comprises receiving control data from the linker, e.g. requests from the linker for example as to specify a size constraint for the size of the updated object code module, the method can be integrated into a dedicated tool chain for generating delta files where the downstream tools send feedback information to the upstream tools, as to provide a global optimisation of the delta file generation.

In another preferred embodiment, the method comprises

- generating a preliminary number of object code modules
- forwarding the preliminary number of object code modules to a linker;
- receiving feedback data from at least one of the linker and a subsequent delta file generator; and

- generating updated object code modules in response to the feedback data.

Consequently, in this embodiment, the object code generation is performed in two or more passes, where feedback information received from downstream processing steps of the first pass is used in the second pass, thereby further improving the suitability of the generated object code for an efficient delta file generation. For example, the linker may generate feedback to the compiler stage causing the compiler to re-compile at least a part of the source code. This has the advantage that the linker can control the resulting set of object code modules, thereby increasing the degrees of freedom of rearranging object code modules by the linker.

When the method further comprises receiving processing information about a previous processing step for generating the current object code modules from corresponding current input code modules, the generation of object code with minimal changes compared to the current version is facilitated. For example, the processing information may include at least one of current layout information about a current layout of different object module parts within the current object code module and compiler information about a previous compilation step, such as at least one of source-to-machine-code mappings and information about which compiler optimisation steps were applied during the previous compilation step. Alternatively or additionally, the method comprises receiving the number of current object code modules, thereby allowing the process to compare the updated object modules with the current object code modules. The term "source-to-machine-code mapping" refers to the relationship between source-code constructs and the corresponding object-code entities. A function (a constant, a class definition, etc.) may correspond to one or several segments. Depending on the implementation, a single object-code entity may also correspond to several functions (constants, class definitions, etc.). The complexity of this mapping depends on the actual implementation. Very simple mappings, e.g. where one source file maps to a single segment, may not even have to be stored explicitly, while complex mappings, e.g. where two functions in combination result in a shared segment, may have to be stored in order to properly match segments of the installed and updated images.

In some embodiments, the method further comprises storing updated processing information about said processing step for generating the updated object code modules in a code repository, thereby making the processing information available for subsequent compilations.

Hence, in some embodiments, meta-information is stored between different compilations and made accessible to the compiler. The meta-information includes information on how source code elements were transformed into object module parts so that the compiler may make similar or even identical transformation in a subsequent translation. In some embodiments, it may even be possible for the compiler to reuse previously created object code.

In some embodiments the updated object code module comprises a plurality of object module parts. For example, each object module part may comprise at least one of a function and a variable. Generally, for the purpose of the present description, the term object module part is intended to refer to relocatable entities of an object code module, in particular the smallest relocatable entities of an object code module, and in particular entities that can be relocated independently of other entities. Generally, object module parts may correspond to structural entities of the programming language, such as functions, procedures, class definitions, constant definitions, variable definitions, etc.

When the optimisation step comprises determining a sequential order of said object module parts within the updated object code module, the process can ensure that the relative order of object module parts in the resulting updated object code differs as little as possible from the order of object module parts in the current version.

In some embodiments, the optimisation step comprises placing at least one of said object module parts that is not included in a current object code module corresponding to a first updated object code module in a second updated object code module different from the first object code module as to reduce the difference between the first updated object code module and the corresponding current object code module. Consequently, an increase in size of an object code module due to additional module parts introduced in the update may be avoided.

Typically, a code generation system comprises a compiler which compiles a source code and generates a number of object code modules, and a linker which generates the executable code in the form of a loadable memory image. The compiler and linker may for example be implemented as separate executable software programs, as functional modules of an integrated software development software application, or the like.

In particular, in a delta file updating scheme, the memory image is subsequently fed into a delta file generator that generates a delta file representative of differences between the current program code version and the updated program code version. Hence, the resulting delta file includes the differences between the current and updated memory images, i.e. the information required for a device to generate the updated version from the current version stored in that device and the delta file. Hence, the size of the file that needs to be loaded to the device is reduced, thereby further reducing the time required to perform a software update.

The source code typically comprises a series of statements written in some human-readable computer programming language. In modern programming languages, the source code which constitutes a software program is usually generated in the form of one or more text files, the so-called source code modules. The compiler is typically a computer program or a functional component of a computer program that translates the source code written in a particular programming language into computer-readable machine code. Typically, when the source code comprises a plurality of source code modules, the compiler compiles each source code module individually and generates corresponding object code modules, i.e. one object code module corresponding to each source code module.

The term object code is intended to refer to a computer-readable program code, typically expressed in binary machine language, which is normally an output of a given translation process, usually referred to as compilation, where the output is in principle ready to be executed by a computer. However, the object code may comprise symbolic references that refer to other locations in the object code. In particular, when the object code comprises a plurality of object code modules, references to functions or variables included in other object code modules are stored as symbolic references. Hence, an object code module is typically relocatable in memory space and contains unresolved references. In particular, a relocatable object code module typically includes symbolic references and relocation information, the latter of which instructs the linker as to how to resolve the references. One interesting property of a relocatable object code module is that neither the start address nor the addresses of referenced symbols are determined yet. Accordingly, relocation is the process of replacing references to symbols with actual addresses.

The linker is typically a computer program or a functional component of a computer program that resolves dependencies between the set of object code modules that constitute a software development project, in particular any symbolic references. Furthermore, the tasks of the linker generally include laying out the object code modules in memory, i.e. assigning relative addresses to the different object code modules in a corresponding address space. The object code modules are typically represented as respective object files in a low-level file format that is hardware and/or platform specific. Accordingly, in some embodiments the method further comprises feeding the updated object code modules into a linker component for linking the updated object code modules resulting in the updated memory image suitable for subsequent processing by a delta file generator.

Here the term layout of the code in memory comprises the respective start or base addresses of the different object code modules, i.e. their respective relative addresses within the address space occupied by the program code.

It is an advantage of the method described herein that it facilitates further optimisation steps at the linker stage, thereby providing an optimised input to a subsequent delta file generation module and, thus, facilitating an optimised generation of the delta file. The optimisation process performed by the linker may include determining the layout of said object code modules in memory.

Further preferred embodiments are disclosed in the dependant claims.

It is noted that the features of the method described above and in the following may be implemented in software and carried out on a data processing system or other processing means caused by the execution of program code means such as computer-executable instructions. Here, and in the following, the term processing means comprises any circuit and/or device suitably adapted to perform the above functions. In particular, the term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

For example, the program code means may be loaded in a memory, such as a Random Access Memory (RAM), from a storage medium or from another computer via a computer network. Alternatively, the described features may be implemented by hardwired circuitry instead of software or in combination with software.

The present invention can be implemented in different ways including the method described above and in the following, a data processing system, and further product means, each yielding one or more of the benefits and advantages described in connection with the first-mentioned method, and each having one or more preferred embodiments corresponding to the preferred embodiments described in connection with the first-mentioned method.

In particular, the invention relates to a data processing system for generating updated object code of a computer program, the updated object code being suitable for the generation of an updated memory image to be loaded into a memory having stored thereon a current memory image corresponding to a current version of a computer program, the data processing system being suitably programmed to perform the steps of the method described above and in the following.

The invention further relates to a computer program product comprising program code means adapted to cause a data processing system to perform the method described above and in the following, when said program code means are executed on the data processing system. The computer program product may be embodied as a computer-readable medium having stored thereon said program code means.

For the purpose of the present description, the term electronic device comprises any device comprising a memory such as a flash memory for storing program code. Examples of such devices include portable radio communications equipment and other handheld or portable devices. The term portable radio communications equipment includes all equipment such as mobile telephones, pagers, communicators, i.e. electronic organisers, smart phones, personal digital assistants (PDAs), handheld computers, or the like.

The above and other aspects of the invention will be apparent and elucidated from the embodiments described in the following with reference to the drawing in which:

fig. 1 schematically shows a block diagram of an embodiment of a system for updating software in a mobile terminal;

fig. 2 schematically shows a block diagram of an electronic device such as a mobile terminal;

fig. 3 shows a block diagram of an example of a software update process;

fig. 4 shows a block diagram of another embodiment of a software update process;

fig. 5 shows a block diagram of yet another embodiment of a software update process;

fig. 6 shows a block diagram of yet another embodiment of a software update process;

fig. 7 schematically illustrates the memory layout of a flash memory before and after a software update where the layout is optimised via an introduction of an overflow block;

fig. 8 schematically illustrates the generation of object code modules facilitating an optimised memory layout by the linker;

fig. 9 show flow diagrams of embodiments of an object code generation process;

fig. 10 shows a flow diagram of an embodiment of the object module part generation sub-process of fig. 9;

figs. 11a-b show a block diagram of another embodiment of a software update process;

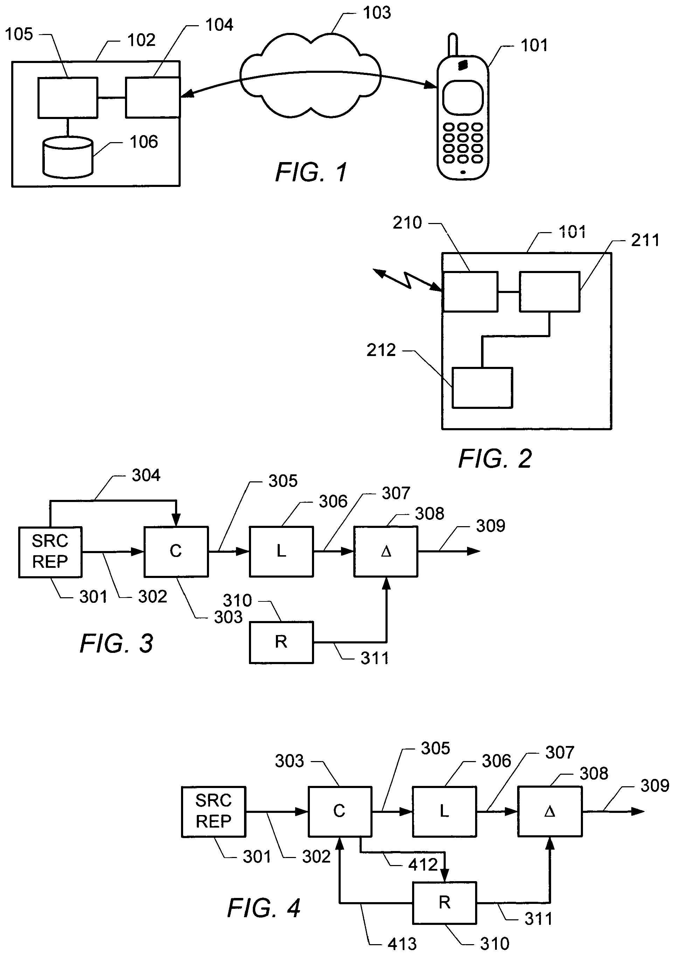

Fig. 1 schematically shows a block diagram of an embodiment of a system for updating software in an electronic device such as a mobile terminal. The system comprises a mobile terminal 101, e.g. a mobile telephone or the like, a software updating system 102, and a communications interface 103.

The software updating system 102 may comprise a server computer having access to the communications network. In some embodiments, the functionality of the server computer may be distributed among a plurality of computers, e.g. computers connected via a computer network, e.g. a local area network, a wide area network, an Internet, or the like. The software updating system 102 comprises an interface circuit 104 allowing the software updating system to communicate data via the communications interface 103. For example, the interface circuit may comprise a serial port, a parallel port, a short range wireless communications interface, e.g. an infrared port, a Bluetooth transceiver, or the like. Further examples of interface circuits include a network card, a DSL modem, a gateway computer, or the like.

The software updating system further comprises a processing unit 105, e.g. the CPU of a server computer, suitably programmed to control and to perform the update process including the generation of the updated program code as described herein. The processing unit further comprises a version database/repository 106 having stored therein memory images of and further information about at least a base/current version and an updated version of the software to be updated. In some embodiments, the version database may further comprise additional information, e.g. a plurality of base versions and/or updated versions, e.g. for different models of mobile terminals, for different groups of customers, and/or the like.

The communications interface 103 may be any suitable wired or wireless communications interface for communicating data between the software updating system 102 and the mobile terminal 101. For example, in the case of a mobile telephone adapted to communicate via a cellular communications network, e.g. a GSM network, a UMTS network, a GPRS network, or the like, the communication between the software updating system and the mobile terminal in connection with a software update may be performed via that cellular communications network, thereby avoiding the need for additional communications interfaces in the mobile terminal.

Hence, in order to update software on the mobile terminal 101, the mobile terminal may receive updating instructions from the updating system, e.g. including the images of the memory sectors to be rewritten.

In a differential updating system using delta files, the updating instructions are generated such that they enable the mobile terminal to generate the updated software version from the existing version already stored in the mobile terminal and from additional information included in the updating instructions. The delta file may be applied in-place, i.e. the changes are made by the mobile terminal on the existing image, thereby requiring little additional storage. Furthermore, since only the delta file needs to be loaded and since the delta file typically is considerably smaller than the new version, the loading time is reduced by the above method.

Hence, in the above, a possible scenario is described in which the code generation process described herein may be applied. However, it will be appreciated that the code generation process described herein may be applied to other update scenarios. For example, the update may be provided to the target device via other media, e.g. other communications channels, via a computer-readable medium, etc.

Embodiments of the code generation process will be described in greater detail below.

Fig. 2 schematically shows a block diagram of an example of an electronic device such as a mobile terminal. The mobile terminal 101 comprises a communications block 210, a processing unit 211, and a memory unit 212.

The communications block 210 comprises circuitry and/or devices allowing radio-based communication of data via a cellular communications network. Hence, for the purpose of the present description, the communications block 210 comprises receiver circuitry and transmitter circuitry for receiving and transmitting data signals. The communications block may further comprise circuitry for suitably processing the signals, e.g. modulating, coding, amplifying, etc., the signals by suitable techniques well known in the art of radio communications.

The mobile terminal further comprises a processing unit 211, e.g. a suitably programmed microprocessor. The processing unit is adapted to determine the version of the software stored in the mobile terminal, to calculate checksums of the stored software, and to generate an updated version of the software upon receipt of corresponding update instructions.

The memory unit 212 has stored thereon the software and/or other data in a predetermined version. For example, the memory 212 may comprise the firmware of the mobile terminal that implements the basic functions of the mobile terminal when loaded into and executed by the processing unit 211. The firmware may further comprise an operating system allowing application software to be executed. Accordingly, the memory 212 may further have stored thereon application software providing additional functionality. The memory 212 is addressed using a suitable address space, thereby allowing the processing unit to access selected parts of the memory. In some embodiments, the memory 212 may be logically or physically divided in a plurality of memory sectors. For example, the memory 212 may comprise flash memory allowing data to be written in sectors of a predetermined size.

For the purpose of the present description, it is assumed that the memory 212 is divided in a number of sectors of a predetermined size denoted P1, P2, P3, ..., PN. However, it is understood that any other addressing of the memory may be used, instead. It is further understood that the updating process described herein may be applied to the entire memory 212, e.g. if the entire image of the flash memory of a mobile phone is to be updated, or to only predetermined parts of the memory, e.g. if one or more software applications are to be updated.

In the following, different examples of a software update process will be described with reference to figs. 3-11. In the drawings like reference numbers refer to like or corresponding components, features, entities, etc.

Fig. 3 shows a block diagram of an example of a software update process. Initially, a compiler 303 receives one or more source code modules 302 from a source code repository 301, e.g. a database of source codes, a version management system, or directly from a source code editing tool. The compiler 303 generates a number of object code modules 305 that are fed into a linker 306. The linker 306 combines the object code modules 305 into an absolute file 307 ready for execution. One of the tasks performed by the linker module 306 is the resolution of cross-references among separately compiled object code modules and the assigning of final addresses to create a single executable program 307. Hence, the output 307 from the linker is a file that can directly be loaded into e.g. the flash memory of a device that is to execute the program. The linker output 307 will also be referred to as a memory image.

The linker output 307 is fed into a delta file generation module 308, also referred to as a delta file generator. The delta file generator 308 receives the binary (updated) image 307 and a corresponding current memory image as inputs and generates a delta file 309 that is sent as an update package, or as a part of an update package, to the device whose memory is to be updated from the current memory image to the updated memory image. The current memory image may, for example, be stored in a repository, e.g. a suitable database, for image files. In some examples the memory image is retrieved from a repository 310 that may be part of the same database system as the source repository 301. In some examples, the delta generator 308 may generator 308 may receive additional inputs 311, e.g. from the repository 310, such as extra link information, e.g. in the form of a so-called map file.

The generation of the delta file may schematically be illustrated by the following operations

$$file_{new} - file_{base} \rightarrow \Delta file.$$

Correspondingly, the actual generation of the new version may then be performed by the mobile terminal according to the following operation

$$file_{base} + \Delta file \rightarrow file_{new}.$$

It is understood that the above operations of generating the delta file (denoted as "-" in the above notation) and generating the new version on the mobile terminal (denoted as "+" operation in the above notation) may comprise more or less complex operations. Examples of suitable delta file techniques include the methods described in US 6,546,552 and in "Compressing Differences of Executable Code" by Brenda Baker, Udi Manber, and Robert Muth, in ACM SIGPLAN Workshop on Compiler Support for System Software (WCSSS'99), 1999.

In the embodiment of fig. 3, the compiler 303 further receives source file change information 304 from the source repository. In some embodiments the change information 304 includes information about which source code components, e.g. which functions, methods, classes, and or the like, have been modified during the current update, i.e. the update from the source code corresponding to the currently installed software to the updated source code that is to be compiled by the compiler 303. This information allows the compiler to generate the updated object code modules 305 with as few differences as possible.

Fig. 4 shows a block diagram of another embodiment of a software update process, similar to the process described in connection with fig. 3. The process of fig. 4 differs from the process of fig. 3 in that the compiler 303 of the embodiment of fig. 4 receives information 413 about a previous compilation, in particular about the compilation that resulted in the currently installed memory image. Accordingly, according to this embodiment, the compiler 303 stores information 412 about each compilation in the repository 310, thereby making the information available for subsequent compilations. It is understood that, alternatively, the compilation information may be stored in a different repository. The compilation information 412 and 413 may include information about source-to-machine code mappings, object code layout, compiler optimisation information, and/or the like. Consequently, the compiler may apply the same optimisation steps to the same parts of the source code, thereby reducing the differences in the generated object code. In particular, if the compiler receives both the information about the previous compilation and change logs about changes in the source code, the compiler can ensure that those parts of the source code that have not been changed are compiled in the same way, e.g. with the same optimisation settings, as in the previous compilation, thereby resulting in minimal changes in the object code.

In some embodiments, the result of the previous compilation may even be stored, e.g. in the repository 310, thereby allowing a direct re-use of previously compiled components.

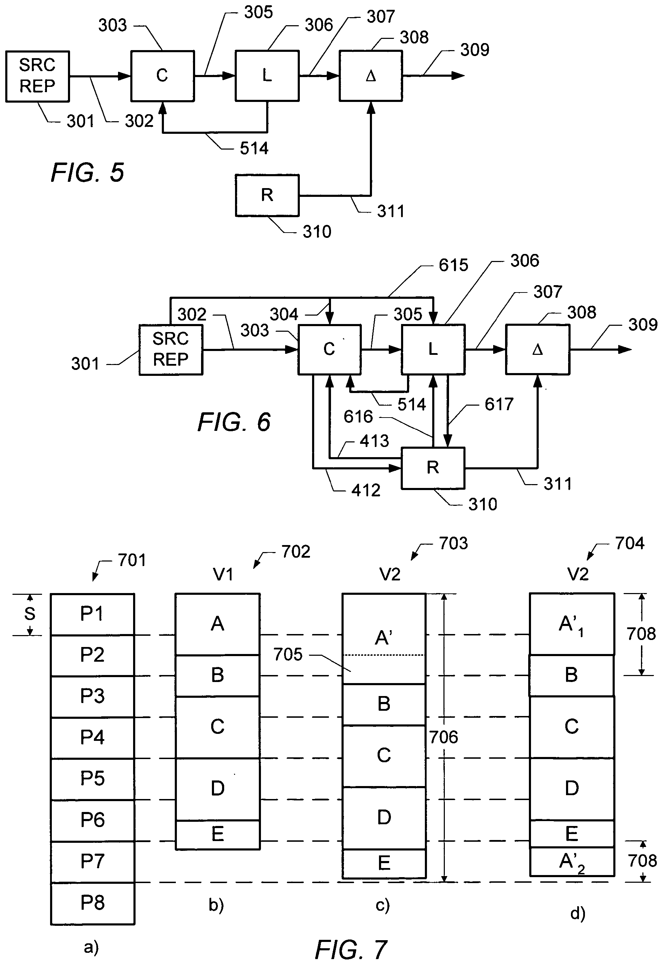

Fig. 5 shows a block diagram of yet another embodiment of a software update process, similar to the process described in connection with fig. 3. The process of fig. 5 differs from the process of fig. 3 in that the compiler 303 of the embodiment of fig. 5 receives feedback information 514 from the linker 306, e.g. requests/constraints on the size of the different object code modules. Consequently, the feedback signal causes the compiler to compile one or more of the source files resulting in object code modules/files that are more suitable for the generation of the optimised memory layout by the linker 306. For example, if the linker determines that the space available for a modified object code module has increased (e.g. because the object code module that in the current build is positioned subsequent in memory space with respect to the modified object code module is no longer present in the updated build), the linker may send a feedback signal 514 to the compiler as to inform the compiler that the upper size constraint for the modified object code module is increased. This in turn may allow the compiler to avoid the splitting of the modified object code module. In some embodiments, the process of fig. 5 may be implemented as a two-pass process where the linker generates the feed-back signal based on the result of the linking of a first pass, i.e. a first compilation and linking. The feedback signal 514 causes the compiler to re-compile one or more of the source files resulting in modified object files that are more suitable for the generation of the optimised memory layout by the linker. In some embodiments, the feedback signal 514 may even include information about which object module parts, e.g. which functions, functions to include in each of the object code modules.

Fig. 6 shows a block diagram of yet another embodiment of a software update process, similar to the process described in connection with fig. 3. The process of fig. 6 differs from the process of fig. 3 in that the compiler 303 of the embodiment of fig. 6 receives information 413 about a previous compilation, as described in connection with fig. 4, and in that the compiler 303 of the embodiment of fig. 6 receives feedback information 514 from the linker 306, as described in connection with fig. 5. Furthermore, in this embodiment, the linker 306 receives change information 615 directly from the source repository, e.g. information about previous linker options, or the like.

Furthermore, the linker 306 of fig. 6 receives information 616 stored in the repository 310 about the previous memory image/build. Accordingly, the linker 306 stores such information about the current linking process of the updated software in the repository for future use, as indicated by data flow arrow 617. The information stored and retrieved in the repository may include the generated image file itself, layout information about the layout of object code modules in the image file, source-to-machine-code mappings, etc.

It is understood that the different types of information received by the compiler in the above embodiments may be combined in different ways, i.e. in some embodiments, the compiler may receive some or all of the information.

Fig. 7 schematically illustrates the memory layout of a flash memory before and after a software update where the layout is optimised via an introduction of an overflow block.

Fig. 7a illustrates the structure of a part of the address space of a flash memory. The address space 701 is divided into a number of pages denoted P1, P2, P3, P4, P5, P6, P7, and P8. The pages have a predetermined size S; in a typical conventional flash memory the page size is 64 kbyte; however other sizes are possible as well.

Fig. 7b illustrates an example of the memory layout of a program code version V1, generally referred to by reference numeral 702, stored in the address space 701. The program code version in this example comprises five object code modules designated A, B, C, D, and E. The object code modules have different sizes and are sequentially arranged in the address space 701.

Fig. 7c illustrates an updated version V2 of the program code, generally designated 703. In this example, it is assumed that the only change between version V1 and version V2 is the replacement of module A by module A', where the module A' is assumed to be larger than the previous module A as illustrated by the additional memory space 705 required for A'. The remaining modules B, C, D, and E are assumed to be unchanged, i.e. identical to the corresponding portion of version V1. However, as is illustrated by reference numeral 706 in fig. 7c, when sequentially arranging the updated version V2, the entire content of memory pages P1 through P7 need to be rewritten. Pages P1, P2, and P3 need to be rewritten, because the content of module A has changed to A', and the remaining pages need to be rewritten because the location of the modules B, C, D, and E is changed between versions V1 and V2.

Fig. 7d illustrates an optimised memory layout of the updated program version V2, generally designated 704, based on an optimised compilation step. In this example, the compiler has generated the updated modules according to hard size constraints, causing the compiler to generate the updated object code modules $A'_1$, B-E of version V2 to be no larger than the corresponding object code modules A-E of the current version V1, i.e. by using information about the previous compilation that resulted in the current version V1. Accordingly, the compiler has generated two object code modules $A'_1$ and $A'_2$ instead of the single object code module A' such that $A'_1$ has the same size as the original module A of version V1. The additional object code module part $A'_2$ comprises the additional object code originating from the source code module corresponding to A' that cannot be placed on the size-restricted object code module $A'_1$. Consequently, the subsequent linker may place the module parts $A'_1$ and $A'_2$ separately, as to reduce the differences in the resulting memory image of V2 compared to the current version V1. In the example of fig. 7d, the linker has appended the "overflow" object code module $A'_2$ to the memory image. Hence, when updating the memory with the optimised updated version V2 to replace the previous version V1, i.e. by re-flashing the relevant pages of a flash memory, only pages P1, P2, and P7 need to be re-written, as illustrated by reference numeral 708. The remaining pages, i.e. pages P3, P4, P5, P6, and P8 need not be re-written.

It is understood that, in some situations, the compiler may place the "overflow" object code $A'_2$ inside one of the other object code modules. For example, if one of the other object code modules is also updated and, as a consequence of the update is reduced in size such that the additional object code $A'_2$ can be placed

within that other updated object code module without violating its size constraint.

Furthermore, if the compiler, based on change information about the source code between versions V1 and V2 and/or information about the compilation of version V1 generates the object code module $A'_1$ to be as similar to the original object code module A of version V1, the differences in the resulting images may further be reduced. For example, if, as is the case in the example of fig. 7, the object code module A spans more than one memory sections (P1 and P2 in fig. 7), the compiler may be able to limit the changes to the object code module $A'_1$ to be restricted to only parts of the object code module such that not all of the memory sections P1 and P2 are affected by the update of A to $A'_1$. Furthermore, a reduction of differences between A and $A'_1$ further reduces the risk that references in other object code modules that refer to $A'_1$ need to be changed, which would result in changes in other object code modules as well.

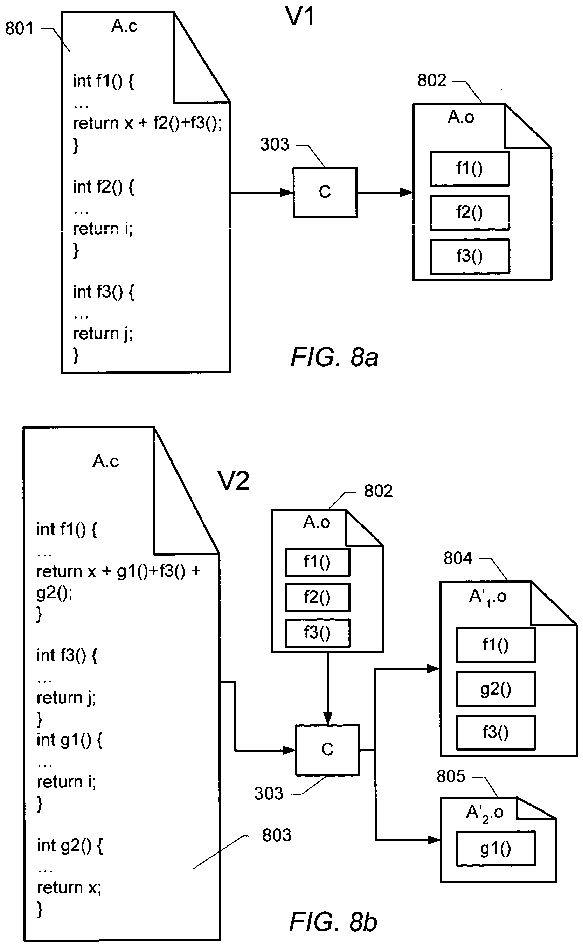

In the following, an example of a splitting of an updated object code module will be described with reference to fig. 8.

Fig. 8 schematically illustrates the generation of object code modules facilitating an optimised memory layout by the linker.

Fig. 8a illustrates the compilation of a current version V1 of a source code module "A.c", generally designated 801, by a compiler 303 resulting in an object code module "A.o", generally designated 802. In this example, it is assumed that the source code module 801 defines three functions f1(), f2(), and f3(). Accordingly, the object code module 802 comprises corresponding three object module parts, each including the object code implementing a corresponding one of the functions f1(), f2(), and f3(). The function f1() further depends on the functions f2() and f3(). The placement of the different object module parts within the object code module is determined by the compiler 303 during compilation.

Fig. 8b illustrates the compilation of an updated version V2 of the source code module "A.c", designated 803, by the compiler 303. In this example, it is assumed that the updated source code module differs from the original version V1 in that the source code now defines functions f1(), f3(), g1(), and g2(). Furthermore, the function f1() now depends on the functions f3(), g1(), and g2(). Hence, compared to the version V1, the definition of the function f2() has been removed, the definition of function f1() has been changed, and two new functions g1() and g2() have been added.

The compiler 303 receives the updated version V2 of the source code 803 and the object code 802 that was generated during the previous compilation of version V1. Alternatively or additionally, the compiler 303 may receive layout information about the layout of the object module parts within the previous version V1 rather than the entire object file 802.

From the previous object code module 802, the compiler 303 determines a maximum size of the updated object code module and a target layout of the object code module parts. Accordingly, in this particular example, the compiler may generate an updated object code module "$A'_1$.o" (804) that is no larger than the previous object code module "A.o". Furthermore, the compiler may position the functions f1() and f3() that were already present in the previous version of the object code at the same locations, i.e. the same relative addresses, within the object code module as in the previous version. In this example, it is assumed that the object code module part corresponding to function g2() is no larger than the previous function f2(). Hence, the compiler may place the new function g2() at the same location as the previous function f2(). Finally, the compiler places the function g1() in a separate "overflow" object code module "$A'_2$.o", designated 805.

Hence, the above example illustrates that the compiler 303 may generate an object code module that is no larger than the previous version. In some embodiments, the compiler may even be configured to generate an updated object file such that its total size remains unchanged, e.g. by a suitable padding. Hence, module displacement in the subsequent linking process is avoided.

Furthermore, the example shows how the compiler may place unchanged and modified module parts at the same position as in the previous version, irrespective of their position in the new source file.

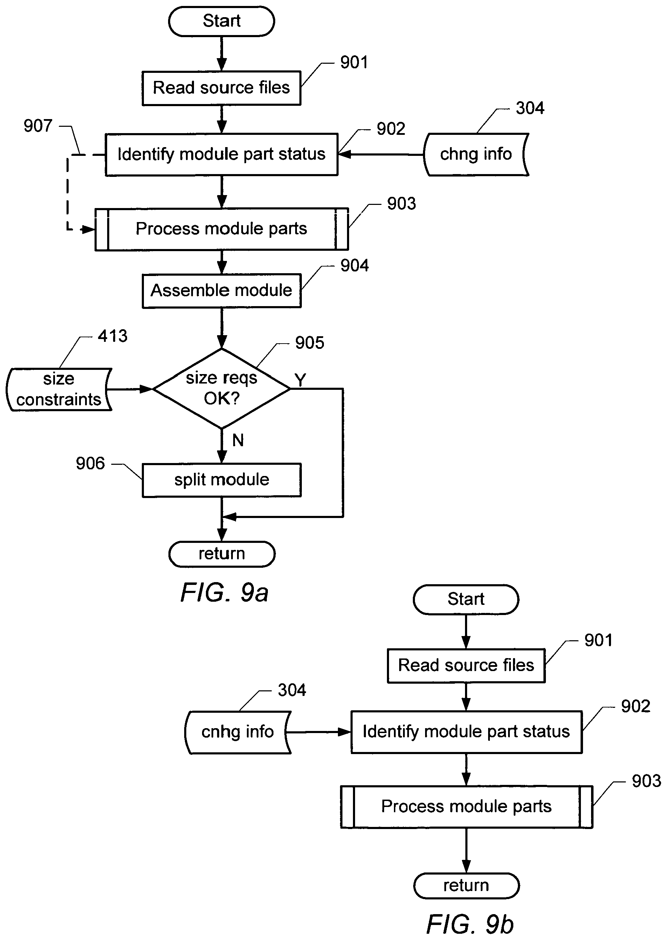

Fig. 9 show flow diagrams of embodiments of an object code generation process.

Fig. 9a shows a flow diagram of one embodiment of an object code generation process. The process starts at step 901 where it receives, e.g. from the source repository 301 an updated version of a source code module/file that is to be compiled. In subsequent step 902, the process identifies a number of module parts, e.g. functions, class definitions, etc., within the source code module and determines the version status of the individual module parts, e.g. based on change information 304 received from the source repository as described above, or based on the previous version of the source code and the previous version of the corresponding object code. In particular, the process determines which module parts have been modified, are unchanged, are new, or have been deleted. In particular, object module parts that have been deleted as compared to the previous object code module, result in free memory space within the updated object code module which may be used when locating added or modified object module parts. In the subsequent sub-process 903, each of the identified module parts is processed resulting in corresponding object module parts. An embodiment of this sub-process will be described in greater detail below. In particular, the sub-process 903 further receives information 907 about memory slots that have become available due to deleted object module parts.

In subsequent step 904, the generated object module parts are assembled into an updated object code module. In some embodiments, the process locates the unchanged object module parts at the same memory locations as in the previous version, thereby further reducing the differences between the previous and the updated version.

In step 905, the resulting size of the generated object code module is compared to the size of the previous version of the corresponding object code module (e.g. as obtained as data 413 from an object code repository 310 as described above) and, optionally, with any size constraints/requests received from the linker. If the generated updated object code module satisfies the size constraint(s), the process terminates. Otherwise, if the updated object code module is too large, in particular larger than the previous version, the process splits the object code module into two or more modules (step 906). An example of such splitting has been described above with reference to figs. 7 and 8.

If compatible with the subsequent linker process and the object code format, the assembly step 904 may be omitted, as illustrated in fig. 9b.

Fig. 9b shows a flow diagram of an alternative embodiment of an object code generation process. This process is similar to the process of fig. 9a. However, in this embodiment, the generated object module parts are not assembled into larger object code modules. Hence, the process results in a number of smaller entities that may be relocated by the linker independently of each other, thereby allowing the linker more degrees of freedom in the generation of an optimised memory image. It may, for example, be beneficial to postpone the reuse of free memory slots until link-time, since the linker can perform a global optimisation for the entire software application rather than for a single source code module.

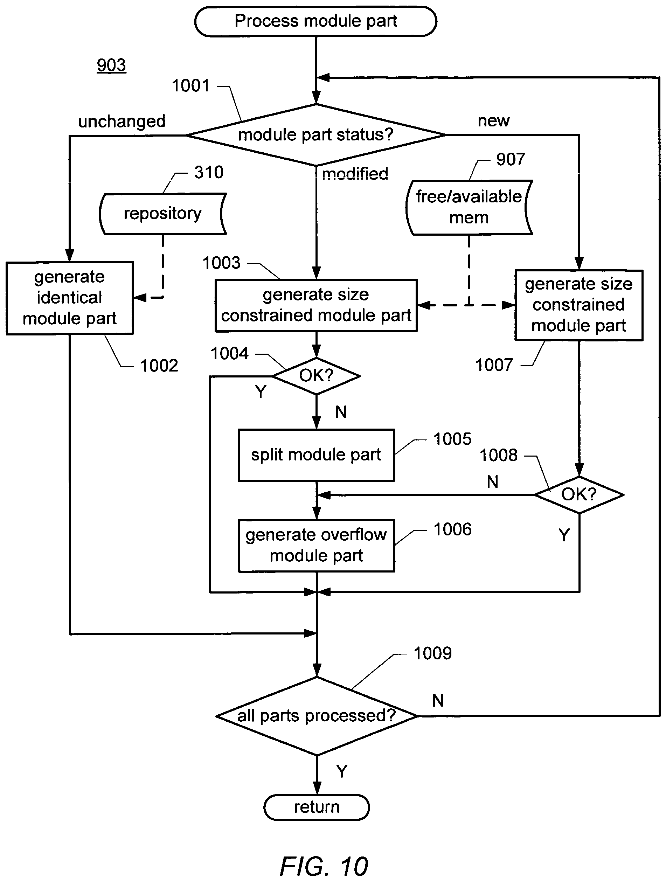

Fig. 10 shows a flow diagram of an embodiment of the object module part generation sub-process 903 of figs. 9a and 9b. The sub-process 903 performs a loop over all identified module parts. For each module part, the process initially determines at step 1001 whether that module part has been modified during the update, whether the module part is a new module part introduced during the update, or whether the module part remains unchanged by the update. If the module part is unchanged, the process proceeds at step 1002;
if the module part is modified, the process proceeds at step 1003; and when the module part is a new module part, the process proceeds at step 1007.

In step 1002, the process compiles the unchanged module part(s). When the compiler uses the same compiler options, optimisation steps, etc., as during the compilation of the previous version, the compilation results in an updated object module part that is very similar or even identical to the previous version of this object module part. Accordingly, the process may receive information about the compilation of the previous version, or even the previous version of the object code itself, e.g. from the repository 310.

In step 1003, the process processes the modified object module parts. In particular, the process compiles the modified object module parts resulting in modified object code. If the size of a modified object module part has decreased compared to the previous version, padding may be used to fill up the remaining memory space, thereby providing a modified object module part that has the same size as the corresponding previous version. The padding may for example be performed by simply leaving the current memory contents in the padded memory space.

In step 1004, the process determines whether the size of the modified object module part has increased. If the size has not increased, the process continues at step 1009. Otherwise, the process continuous at step 1005, where the module part is split in two: one part that fits in the given memory slot and one part that may be placed elsewhere during the subsequent linking process. Hence, the process generates an overflow module part including the second module part (step 1006). It is noted that the splitting of an object module part, e.g. a function, may require additional branch instructions to be introduced. In one embodiment, the process performs a control flow analysis as to determine whether the introduction of additional branch instructions may be avoided and, if this is not the case, to identify one or more suitable split points. For example, it is typically desirable to avoid the busy, i.e. frequently executed, portions of the code such as inner loops. For the purpose of determining suitable split points, known control flow analysis techniques may be employed. For example, Alfred V. Aho, Ravi Sethi, Jeffrey D. Ullman: "Compilers: Principles, Techniques and Tools", p 604 Addison-Wesley, 1986, discloses an algorithm for detecting loops.

In step 1007, the process compiles the new module parts, i.e. the module parts that were not present in the previous version but were added during the update. In one embodiment, the process generates a size-constraint object module part such that it fits in one of the available memory slots, if any, e.g. memory slots that have been detected to be available due to the deletion of another object module part. If all parts fit into such memory slots (step 1008), the process continuous at step 1009. Otherwise, the process continuous at step 1006 where the module parts that do not fit into the available memory slots are located in an overflow module part.

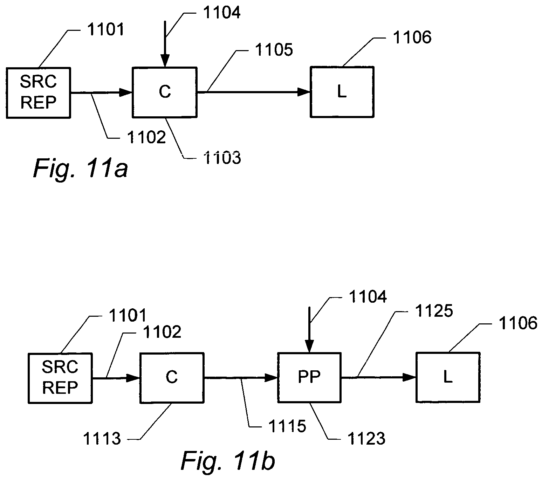

Figs. 11a-b show block diagrams of further embodiments of a software update process. In the embodiment of fig. 11a, the update process is performed by a compiler module 1103 and a linker module 1106. in particular, the compiler module 1103 receives the updated source code 1102 from a source repository 1101 and generates the updated object code modules 1105 as described herein. Accordingly, the compiler further receives information 1104 including one or more of the following: change information about changes in the source code, compiler information about the compilation of the previous version of the source code, object code information about the previous object code, etc. Based on the received information, the compiler generates updated object code modules 1105 that are as similar as possible to the previous version of the object code. The updated object code is forwarded to the linker 1106.

In the embodiment of fig. 11b, the update process is performed by a compiler module 1113, a post-processing module 1123, and a linker module 1106. In this embodiment, the compiler 1113 may be a conventional compiler that receives the updated source code 1102 from the repository 1101 and generates updated object code 1115. The post-processor 1123 receives the object code 1115 and additional information 1104 as described above. The post-processor 1123 relocates the individual object module parts in the object code modules generated by the compiler 1113 as to minimize the differences of the updated object code from the previous version of the object code. Hence, the post-processor may re-arrange object-module parts, split object code modules and/or object module parts, and generate overflow object code modules as described herein resulting in optimised updated object code modules 1125 which are fed into the linker 1106.

It is an advantage of the embodiment of fig. 11b that the post-processor may be implemented as a separate software component that may be used in conjunction with conventional compiler and/or linker. Consequently, this embodiment only requires relatively little software engineering as it allows the reuse of existing software development tools.

The embodiment of fig. 11a, on the other hand, has the advantage that the compiler 1103 may perform additional optimisation steps for further reducing the differences between the updated and the previous version of the object code. For example, the compiler may be adapted to generate object code that is similar to the object code of the previous version, e.g. by using the same optimisation techniques, etc.

Hence, in the above a method has been described that integrates the compiler in the creation of a delta update package. Unnecessary changes are thus avoided by using close to identical memory layouts in subsequent versions of the software. Unlike linkers and post-processors to linkers such as delta-file generators, a compiler can be given the ability to generate code under size constraints and split module parts that no longer fit into their previous slots.

It is noted that the above embodiments have mainly been described with reference to flash memory. However, it is understood that the method described herein may also be implemented in connection with other types of memory, including memory types that are writable in smaller units, e.g. byte-wise or even bitwise. Furthermore, the method described herein may also be applied in connection with other storage media, such as optical disks, hard disks, floppy disks, tapes, and/or other types of magnetic and/or optical storage media. For example, the method described herein may also be applied to the update of computers, such as desktop computers, which load programs from a secondary memory/storage medium into RAM before execution.

The invention can be implemented by means of hardware comprising several distinct elements, and by means of a suitably programmed computer. In the device claims enumerating several means, several of these means can be embodied by one and the same item of hardware, e.g. a suitably programmed microprocessor or computer, and/or one or more communications interfaces as described herein. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of generating updated object code (305, 1105, 1125) of a computer program, the updated object code being suitable as an input to a linker component (306, 1106) for the generation of an updated memory image (307) to be loaded into a storage medium (212) having stored thereon a current memory image corresponding to a current version of said computer program, wherein the steps of the method are performed by a compiler or a post-processor to a compiler, wherein the method comprises:

   - receiving (901, 303, 1103) at least one updated input code module (302, 1102, 803) from which the updated object code is to be generated;
   - processing (303) at least the updated input code module to generate at least one updated object code module adapted to be linked by a linker component (306, 1106) as to generate the updated memory image;

   **characterised in that** the method further comprises

   - receiving processing information (413) about a previous processing step that resulted in a set of current object code modules (802) corresponding to the current version of said computer program, wherein the processing information (413) includes at least one of current layout information indicative of a current layout of a set of object module parts within the current object code module and compiler information about a previous compilation step, and control data from a linker component indicative of size constraints to be imposed on the updated object code modules; and that processing (303) at least

the updated input code module (302, 1102, 803) comprises:
- performing (903, 303, 1103, 1123) at least one optimisation process to reduce differences between said updated object code module and a corresponding one of the set of current object code modules (802), the set of current object code modules corresponding to the current version of said computer program, wherein the optimisation process is performed prior to feeding the updated object code module to a linker component; and wherein the optimisation step comprises, if the size of the updated object code module is larger than the size of the corresponding one of the set of current object code modules obtained
from the processing information (413) and optionally than the size constraints of the control data, to generate a split updated object code module split into a first updated object code module (804) having a size no larger than the corresponding one of the set of current object code modules (802) and an overflow object code module (805) or overflow object code module part.

**2.** A method according to claim 1, wherein the at least one updated input code module is at least one updated source code module, and wherein the method further comprises compiling the updated source code module.

**3.** A method according to claim 2, wherein the updated input code module is at least one preliminary object code module (1115) generated by a compiler from at least one corresponding updated source code module.

**4.** A method according to any one of claims 1 through 3, further comprising receiving the set of current object code modules prior to performing (303, 903, 1103, 1123) at least one optimization process.

**5.** A method according to any one of claims 1 through 4, further comprising receiving change information (304) indicative of differences between the at least one updated input code module and at least one corresponding current input code module, the at least one current input code module corresponding to the set of current object code modules.

**6.** A method according to claim 5, wherein the compiler information includes at least one of source-to-machine code mappings and information indicative of which compiler optimisation steps were applied during the previous compilation step.

**7.** A method according to any one of claims 1 through 5, further comprising storing updated processing information (412) about said processing step for generating the updated object code modules for use in a subsequent processing step.

**8.** A method according to claim 7, wherein the updated processing information (412) includes at least one of layout information indicative of a layout of a set of object module parts within the updated object code module and compiler information about a compilation step.

**9.** A method according to claim 8, wherein the compiler information includes at least one of source-to-machine code mappings and information indicative of which compiler optimisation steps were applied during the compilation step.

**10.** A method according to any one of claims 1 through 9 , wherein the updated object code module comprises a plurality of object module parts.

**11.** A method according to claim 10, wherein each of said object module parts is a relocatable entity which can be relocated within a memory image.

**12.** A method according to claim 10 or 11 , wherein each of said object module parts comprises at least one of a function definition, a procedure definition, a class definition, a constant definition, a variable definition.

**13.** A method according to anyone of claims 10 through 12, wherein the optimisation step comprises determining a sequential order of said object module parts within the updated object code module.

**14.** A method according to any one of claims 1 through 13 , further comprising feeding at least the updated object code module into a linker component for linking at least the updated object code module resulting in the updated memory image suitable for subsequent processing by a delta file generator.

**15.** A method according to any one of claims 1 through 14 , wherein the computer program is a computer program adapted to be executed by a mobile terminal (101).

**16.** A data processing system (102) for generating updated object code of a computer program, the updated object code being suitable as an input to a linker component for the generation of an updated memory image to be loaded into a memory having stored thereon a current memory image corresponding to a current version of said computer program, the data processing system being suitably programmed to perform the steps of the method according to any one of claims 1 through 15.

**17.** A computer program product comprising program code means adapted
to cause a data processing system to perform the method according to any one of claims 1 through 14, when said program code means are executed on the data processing system.

**18.** Use of a method according to any one of claims 1 through 14 for the reprogramming of portable radio communications equipment (101).

**Patentansprüche**

**1.** Verfahren zum Generieren eines aktualisierten Objektcodes (305, 1105, 1125) eines Computerprogramms, wobei der aktualisierte Objektcode als Eingang zu einer Linker-Komponente (306, 1106) für die Generierung eines aktualisierten Speicherbildes (307) geeignet ist, das in ein Speichermedium (212) geladen wird, in dem ein aktuelles Speicherbild gespeichert ist, das einer aktuellen Version des Computerprogramms entspricht, wobei die Schritte des Verfahrens von einem Compiler oder einem Post-Prozessor zu einem Compiler ausgeführt werden, wobei das Verfahren umfasst:

- Empfangen (901, 303, 1103) zumindest eines aktualisierten Eingangscodemoduls (302, 1102, 803), aus welchem der aktualisierte Objektcode zu generieren ist;
- Verarbeiten (303) zumindest des aktualisierten Eingangscodemoduls, um zumindest ein aktualisiertes Objektcodemodul zu generieren, das ausgebildet ist, durch eine Linker-Komponente (306, 1106) angebunden zu werden, um das aktualisierte Speicherbild zu generieren;

**dadurch gekennzeichnet, dass** das Verfahren ferner umfasst

- Empfangen von Verarbeitungsinformationen (413) über einen vorangehenden Verarbeitungsschritt, der zu einem Satz aktueller Objektcodemodule (802) entsprechend der aktuellen Version des Computerprogramms geführt hat, wobei die Verarbeitungsinformationen (413) zumindest eines von aktuellen Gestaltungsinformationen, die eine aktuelle Gestaltung eines Satzes von Objektmodulteilen in dem aktuellen Objektcodemodul angeben, und Compiler-Informationen über einen vorangehenden Kompilierungsschritt enthalten, und von Steuerdaten von einer Linker-Komponenten, die Größeneinschränkungen angeben, die bei den aktualisierten Objektcodemodulen anzuwenden sind; und dass eine Verarbeitung (303) zumindest des aktualisierten Eingangscodemoduls (302, 1102, 803) umfasst:
- Durchführen (903, 303, 1103, 1123) zumindest eines Optimierungsprozesses zur Verringerung von Differenzen zwischen dem aktualisierten Objektcodemodul und einem entsprechenden des Satzes aktueller Objektcodemodule (802), wobei der Satz aktueller Objektcodemodule der aktuellen Version des Computerprogramms entspricht, wobei der Optimierungsprozess vor dem Zuleiten des aktualisierten Objektcodemoduls zu einer Linker-Komponente durchgeführt wird; und wobei der Optimierungsschritt, wenn die Größe des aktualisierten Objektcodemoduls größer als die Größe des entsprechenden Satzes aktueller Objektcodemodule ist, die aus den Verarbeitungsinformationen (413) erhalten werden, und optional als die Größeneinschränkungen der Steuerdaten, ein Generieren eines geteilten aktualisierten Objektcodemoduls umfasst, das in ein erstes aktualisiertes Objektcodemodul (804) mit einer Größe, die jene des entsprechenden Satzes aktueller Objektcodemodule (802) nicht überschreitet, und ein Überlauf-Objektcodemodul (805) oder einen Überlauf-Objektcodemodulteil geteilt ist.

**2.** Verfahren nach Anspruch 1, wobei das zumindest eine aktualisierte Objektcodemodul zumindest ein aktualisiertes Quellencodemodul ist und wobei das Verfahren ferner ein Kompilieren des aktualisierten Quellencodemoduls umfasst.

**3.** Verfahren nach Anspruch 2, wobei das aktualisierte Eingangscodemodul zumindest ein vorläufiges Objektcodemodul (1115) ist, das von einem Compiler aus zumindest einem entsprechenden aktualisierten Quellencodemodul generiert wird.

**4.** Verfahren nach einem der Ansprüche 1 bis 3, des Weiteren umfassend ein Empfangen des Satzes aktueller Objektcodemodule vor Durchführen (303, 903, 1103, 1123) zumindest eines Optimierungsprozesses.

**5.** Verfahren nach einem der Ansprüche 1 bis 4, des Weiteren umfassend ein Empfangen von Änderungsinformationen (304), die Unterschiede zwischen dem zumindest einen aktualisierten Eingangscodemodul und zumindest einem entsprechenden aktuellen Eingangscodemodul angeben, wobei das zumindest eine aktuelle Eingangscodemodul dem Satz aktueller Objektcodemodule entspricht.

**6.** Verfahren nach Anspruch 5, wobei die Compiler-Informationen zumindest eines von Quellen-Maschinen-Codeabbildungen und Informationen enthalten, die anzeigen, welche Compiler-Optimierungsschrit-

te während des vorangehenden Kompilierungs-schritts angewendet wurden.

7. Verfahren nach einem der Ansprüche 1 bis 5, des Weiteren umfassend ein Speichern aktualisierter Verarbeitungsinformationen (412) über den Verarbeitungsschritt zum Generieren der aktualisierten Objektcodemodule zur Verwendung in einem anschließenden Verarbeitungsschritt.

8. Verfahren nach Anspruch 7, wobei die aktualisierten Verarbeitungsinformationen (412) zumindest eines von Gestaltungsinformationen, die eine Gestaltung eines Satzes von Objektmodulteilen in dem aktualisierten Objektcodemodul angeben, und Compiler-Informationen über einen Kompilierungsschritt enthalten.

9. Verfahren nach Anspruch 8, wobei die Compiler-Informationen zumindest eines von Quellen-Maschinen-Codeabbildungen und Informationen enthalten, die anzeigen, welche Compiler-Optimierungsschritte während des Kompilierungsschritts angewendet wurden.

10. Verfahren nach einem der Ansprüche 1 bis 9, wobei das aktualisierte Objektcodemodul mehrere Objektmodulteile umfasst.

11. Verfahren nach Anspruch 10, wobei jeder der Objektmodulteile eine verschiebbare Einheit ist, die in einem Speicherbild verschoben werden kann.

12. Verfahren nach Anspruch 10 oder 11, wobei jeder der Objektmodulteile zumindest eine Funktionsdefinition, eine Prozedurdefinition, eine Klassendefinition, eine Konstantendefinition, eine Variablendefinition umfasst.

13. Verfahren nach einem der Ansprüche 10 bis 12, wobei der Optimierungsschritt ein Bestimmen einer Reihenfolge der Objektmodulteile im aktualisierten Objektcodemodul umfasst.

14. Verfahren nach einem der Ansprüche 1 bis 13, des Weiteren umfassend ein Zuleiten zumindest des aktualisierten Objektcodemoduls in eine Linker-Komponente zum Anbinden zumindest des aktualisierten Objektcodemoduls, das zu dem aktualisierten Speicherbild führt, das für eine anschließende Verarbeitung durch einen Deltadateigenerator geeignet ist.

15. Verfahren nach einem der Ansprüche 1 bis 14, wobei das Computerprogram ein Computerprogramm ist, das dazu ausgebildet ist, von einem Mobilgerät (101) ausgeführt zu werden.

16. Datenverarbeitungssystem (102) zum Generieren eines aktualisierten Objektcodes eines Computerprogramms, wobei der aktualisierte Objektcode als Eingang zu einer Linker-Komponente für die Generierung eines aktualisierten Speicherbildes geeignet ist, das in einen Speicher geladen wird, in dem ein aktuelles Speicherbild gespeichert ist, das einer aktuellen Version des Computerprogramms entspricht, wobei das Datenverarbeitungssystem geeignet programmiert ist, um die Schritte des Verfahrens nach einem der Ansprüche 1 bis 15 auszuführen.

17. Computerprogrammprodukt, das ein Programmcodemittel umfasst, das dazu ausgebildet ist, ein Datenverarbeitungssystem zu veranlassen, das Verfahren nach einem der Ansprüche 1 bis 14 auszuführen, wenn die Programmcodemittel auf dem Datenverarbeitungssystem ausgeführt werden.

18. Verwendung eines Verfahrens nach einem der Ansprüche 1 bis 14 für die Neuprogrammierung eines tragbaren Funkkommunikationsgeräts (101).

**Revendications**

1. Procédé de production de code objet mis à jour (305, 1105, 1125) d'un programme informatique, le code objet mis à jour étant approprié en tant qu'entrée dans un composant d'éditeur de lien (306, 1106) pour la production d'une image mémoire mise à jour (307) à charger dans un support de stockage (212) ayant stockée en son sein une image mémoire courante correspondant à une version courante dudit programme informatique, dans lequel les étapes du procédé sont effectuées par un compilateur ou un post-processeur à un compilateur, dans lequel le procédé comprend :

- la réception (901, 303, 1103) d'au moins un module de code d'entrée mis à jour (302, 1102, 803) à partir duquel le code objet mis à jour doit être produit ;
- le traitement (303) au moins du module de code d'entrée mis à jour pour produire au moins un module de code objet mis à jour conçu pour être lié par un composant d'éditeur de lien (306, 1106) pour produire l'image mémoire mise à jour ;

**caractérisé en ce que** le procédé comprend en outre

- la réception d'informations de traitement (413) concernant une étape de traitement précédente qui a abouti à un ensemble de modules de code objet courants (802) correspondant à la version courante dudit programme informatique, dans lequel les informations de traitement (413) incluent au moins une d'une information de topologie courante indicative d'une topologie courante d'un ensemble de parties de module objet dans à l'intérieur du module de code objet courant et d'une information de compilateur concernant une étape de compilation précédente, et des données de commande provenant d'un composant d'éditeur de lien indicatives de contraintes de taille à imposer aux modules de code objet mis à jour ; et **en ce que** le traitement (303) au moins du module de code d'entrée mis à jour (302, 1102, 803) comprend :

- l'exécution (903, 303, 1103, 1123) d'au moins un processus d'optimisation pour réduire des différences entre ledit module de code objet mis à jour et un module correspondant de l'ensemble de modules de code objet courants (802), l'ensemble de modules de code objet courants correspondant à la version courante dudit programme informatique, dans lequel le processus d'optimisation est effectué avant d'amener le module de code objet mis à jour à un composant d'éditeur de lien ; et dans lequel l'étape d'optimisation comprend, si la taille du module de code objet mis à jour est plus grande que la taille du module correspondant de l'ensemble de modules de code objet courants obtenues à partir des informations de traitement (413) et de manière facultative que les contraintes de taille des données de commande, la production d'un module fractionné de code objet mis à jour, fractionné en un premier module de code objet mis à jour (804) n'ayant pas une taille plus grande que le module correspondant de l'ensemble de modules de code objet courants (802) et en un module de code objet en dépassement (805) ou partie de module de code objet en dépassement.

2. Procédé selon la revendication 1, dans lequel l'au moins un module de code d'entrée mis à jour est au moins un module de code source mis à jour, et dans lequel le procédé comprend en outre la compilation du module de code source mis à jour.

3. Procédé selon la revendication 2, dans lequel le module de code d'entrée mis à jour est au moins un module de code objet préliminaire (1115) produit par un compilateur à partir d'au moins un module de code source mis à jour correspondant.

4. Procédé selon l'une quelconque des revendications 1 à 3, comprenant en outre la réception de l'ensemble de modules de code objet courants avant d'effectuer (303, 903, 1103, 1123) au moins un processus d'optimisation.

5. Procédé selon l'une quelconque des revendications 1 à 4, comprenant en outre la réception d'informations de changement (304) indicatives de différences entre l'au moins un module de code d'entrée mis à jour et au moins un module de code d'entrée courant correspondant, l'au moins un module de code d'entrée courant correspondant à l'ensemble de modules de code objet courants.

6. Procédé selon la revendication 5, dans lequel les informations de compilateur incluent au moins une de mises en correspondance de code source-machine et d'informations indicatives de quelles étapes d'optimisation de compilateur ont été appliquées pendant l'étape de compilation précédente.

7. Procédé selon l'une quelconque des revendications 1 à 5, comprenant en outre le stockage d'informations de traitement mises à jour (412) concernant ladite étape de traitement pour produire les modules de code objet mis à jour à utiliser dans une étape de traitement suivante.

8. Procédé selon la revendication 7, dans lequel les informations de traitement mises à jour (412) incluent au moins une d'informations de topologie indicatives d'une topologie d'un ensemble de parties de module objet à l'intérieur du module de code objet mis à jour et d'informations de compilateur concernant une étape de compilation.

9. Procédé selon la revendication 8, dans lequel les informations de compilateur incluent au moins une de mises en correspondance de code source-machine et d'informations indicatives de quelles étapes d'optimisation de compilateur ont été appliquées pendant l'étape de compilation.

10. Procédé selon l'une quelconque des revendications 1 à 9, dans lequel le module de code objet mis à jour comprend une pluralité de parties de module objet.

11. Procédé selon la revendication 10, dans lequel chacune desdites parties de module objet est une entité pouvant être relogée qui peut être relogée à l'intérieur d'une image mémoire.

12. Procédé selon la revendication 10 ou 11, dans lequel chacune desdites parties de module objet comprend au moins une d'une définition de fonction, d'une définition de procédure, d'une définition de catégorie, d'une définition de constante, d'une définition de variable.

13. Procédé selon l'une quelconque des revendications 10 à 12, dans lequel l'étape d'optimisation comprend la détermination d'un ordre séquentiel desdites parties de module objet à l'intérieur du module de code objet mis à jour.

**14.** Procédé selon l'une quelconque des revendications 1 à 13, comprenant en outre l'amenée au moins du module de code objet mis à jour dans un composant d'éditeur de lien pour lier au moins le module de code objet mis à jour aboutissant à l'image mémoire mise à jour appropriée pour un traitement suivant par un générateur de fichier de delta.

**15.** Procédé selon l'une quelconque des revendications 1 à 14, dans lequel le programme informatique est un programme informatique conçu pour être exécuté par un terminal mobile (101).

**16.** Système de traitement de données (102) pour produire un code objet mis à jour d'un programme informatique, le code objet mis à jour étant approprié en tant qu'entrée dans un composant d'éditeur de lien pour la production d'une image mémoire mise à jour à charger dans une mémoire ayant stockée en son sein une image mémoire courante correspondant à une version courante dudit programme informatique, le système de traitement de données étant programmé de façon appropriée pour effectuer les étapes du procédé selon l'une quelconque des revendications 1 à 15.

**17.** Produit formant programme informatique comprenant un moyen de code de programme conçu pour amener un système de traitement de données à effectuer le procédé selon l'une quelconque des revendications 1 à 14, lorsque ledit moyen de code de programme est exécuté sur le système de traitement de données.

**18.** Utilisation d'un procédé selon l'une quelconque des revendications 1 à 14 pour la reprogrammation d'équipement portatif de radiocommunications (101).

*FIG. 1*

*FIG. 2*

*FIG. 3*

*FIG. 4*

FIG. 5

FIG. 6

FIG. 7

V1

801

A.c

int f1() {
...
return x + f2()+f3();
}

int f2() {
...
return i;
}

int f3() {
...
return j;
}

303

C

802

A.o

f1()

f2()

f3()

*FIG. 8a*

A.c

V2

int f1() {
...
return x + g1()+f3() +
g2();
}

int f3() {
...
return j;
}
int g1() {
...
return i;
}

int g2() {
...
return x;
}

803

802

A.o

f1()

f2()

f3()

303

C

804

A'$_1$.o

f1()

g2()

f3()

805

A'$_2$.o

g1()

*FIG. 8b*

Start

Read source files — 901

907 - - - → Identify module part status — 902 ← chng info — 304

Process module parts — 903

Assemble module — 904

size constraints — 413 → size reqs OK? — 905 → Y

N

split module — 906

return

*FIG. 9a*

Start

Read source files — 901

cnhg info — 304 → Identify module part status — 902

Process module parts — 903

return

*FIG. 9b*

FIG. 10

1104

1101

1105

1106

SRC
REP → C → L

1102

1103

*Fig. 11a*

1104

1101
1102

1125

1106

SRC
REP → C → PP → L

1113

1115

1123

*Fig. 11b*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030142556 A
- US 5230050 A
- EP 0472812 A
- US 5469572 A
- US 6546552 B

### Non-patent literature cited in the description

- Compressing Differences of Executable Code. **BRENDA BAKER ; UDI MANBER ; ROBERT MUTH.** ACM SIGPLAN Workshop on Compiler Support for System Software (WCSSS'99). 1999
- **ALFRED V. AHO ; RAVI SETHI ; JEFFREY D. ULLMAN.** Compilers: Principles, Techniques and Tools. Addison-Wesley, 1986, 604